# NOUVEAU FASCICULE DE BREVET EUROPEEN

(11) **EP 3 343 123 B2**
(45) Date de publication et mention de la décision concernant l'opposition: **02.08.2023**
(45) Mention de la délivrance du brevet: 05.02.2020
(21) Numéro de dépôt: 17208070.7
(22) Date de dépôt: 18.12.2017
(51) Int. Cl.: F24F 13/14, F24F 13/06, G05D 7/06, F24F 11/00, F24F 110/30, F24F 140/60

(54) **DISPOSITIF AUTOALIMENTE D'EXTRACTION OU D'INSUFFLATION D'AIR**
VORRICHTUNG MIT EIGENER STROMVERSORGUNG ZUM ABSAUGEN ODER EINBLASEN VON LUFT
SELF-POWERED DEVICE FOR EXTRACTING OR BLOWING AIR

(30) Priorité: 27.12.2016 FR 1663422
(43) Date de publication de la demande: 04.07.2018
(73) Titulaire: Atlantic Climatisation et Ventilation, 69330 Meyzieu (FR)
(72) Inventeur: DEMIA, Laurent, 01120 MONTLUEL (FR); FOURMENTIN, Dorian, ORLEANS 45000 (FR)
(74) Mandataire: Ipsilon

(56) Documents cités:
- EP-A1- 2 924 361
- WO-A1-2008/022766
- US-A- 4 838 310
- US-A- 5 114 070
- US-A- 5 251 815
- US-A1- 2006 105 697
- US-B1- 9 157 645

## Description

L'invention se rapporte au domaine général des dispositifs d'extraction ou d'insufflation d'air, tels que des registres de ventilation ou des bouches de ventilation.

Les registres et les bouches de ventilation sont des dispositifs destinés à être positionnés dans des gaines de ventilation d'une installation de ventilation d'un local comportant au moins un groupe de ventilation.

Contrairement aux registres qui peuvent être installés à différents endroits d'une gaine de ventilation, les bouches sont placées au niveau des entrées ou sorties d'air débouchant dans les pièces à ventiler du local, et ont pour rôle premier de masquer de façon esthétique ces entrées ou sorties d'air.

Ces bouches peuvent intégrer des fonctions supplémentaires qui les rapprochent des registres, par exemple le réglage manuel de l'ouverture de la bouche pour ajuster le débit, l'orientation du flux d'air au moyen de volets, un contrôle d'un débit constant (bouches dites autoréglables), une modulation du débit en fonction de l'hygrométrie de la pièce (bouches dites hygroréglables), une modulation du débit en fonction d'une présence dans la pièce.

Bien qu'il existe des bouches autoréglables ou hygroréglables de conception entièrement mécanique, on s'intéresse dans la suite aux bouches intelligentes qui comportent des éléments (capteurs, circuits de contrôle électronique) nécessitant une alimentation électrique.

A titre d'exemple, comme décrit dans le document de brevet FR 2 956 191, une telle bouche peut être équipée d'un détecteur de présence et assurer l'éclairage de la pièce et le déplacement d'un volet mobile dont la position influe sur le degré d'ouverture de la bouche, en particulier dans le cas de pièces humides de type WC.

Dans le document de brevet FR 2 956 191, la bouche est raccordée au réseau électrique, ce qui représente une contrainte à l'installation.

Elle pourrait également être équipée d'une pile électrique, qui nécessiterait d'être surveillée et remplacée régulièrement et relativement souvent.

Pour résoudre ce problème d'alimentation électrique, des dispositifs autoalimentés ont déjà été proposés. En particulier, le document de brevet US 5, 251, 815 décrit un registre autoalimenté d'extraction ou d'insufflation d'air comportant :
- une source d'énergie électrique autonome comprenant un dispositif de récupération d'énergie comportant une turbine disposée au moins partiellement dans le flux d'air traversant le registre, un générateur de conversion connecté à la turbine pour convertir l'énergie mécanique de rotation de la turbine en un signal électrique, et un dispositif de stockage de l'énergie récupérée à partir dudit signal électrique ;
- un agencement de modulation du débit d'air traversant le registre, comportant un élément (en particulier un volet) à position réglable par un actionneur, et
- un circuit électronique de contrôle configuré pour piloter, via l'actionneur, la position de l'élément de l'agencement de modulation,
registre dans lequel le circuit électronique de contrôle et l'actionneur sont alimentés par la source d'énergie électrique.

Selon ce document, la vitesse de rotation de la turbine est en outre utilisée pour estimer le niveau de débit et réaliser une régulation de débit en boucle fermée en asservissant l'agencement de modulation du débit par comparaison entre le niveau de débit estimé et un débit de consigne, pour obtenir un débit traversant le registre sensiblement égal au débit de consigne.

Dans le registre décrit dans ce document, le dispositif de stockage de l'énergie est relié au système de récupération d'énergie uniquement dans le cadre d'un mode de recharge, par l'intermédiaire d'un commutateur, lorsque le niveau de charge est jugé trop faible.

Un tel dispositif autoalimenté avec régulation de débit présente néanmoins un certain nombre d'inconvénients :

Le seuil d'autonomie du registre est lié d'une part, à la puissance et à la tension délivrées par le générateur de conversion, et d'autre part à la gestion du stockage de l'énergie récupérée dans le dispositif de stockage.

Il est ainsi nécessaire que la turbine ait une vitesse de rotation minimale pour que le générateur de conversion puisse à son tour délivrer une tension (ou éventuellement une puissance) suffisante pour alimenter l'électronique. Autrement dit, dans le cas où le débit au niveau de ce registre, et par suite la vitesse de rotation de la turbine, sont insuffisants pour assurer l'autonomie énergétique du registre, dans une position d'ouverture donnée de son volet de modulation, il n'est plus capable de fonctionner de manière autonome.

Une solution connue pour augmenter la tension et la puissance du générateur de conversion est d'augmenter la vitesse de rotation par une augmentation de la vitesse d'air au niveau de la turbine en réduisant la section de passage d'air. Une telle solution se fait néanmoins au détriment de l'efficacité énergétique du dispositif (consommation du ventilateur) et de sa performance acoustique), car une réduction de la section de passage d'air introduit des pertes de charges plus importantes et génère des sifflements pour des pressions élevées. En outre, augmenter la vitesse de rotation de la turbine entraîne d'autres conséquences non désirées comme l'augmentation du bruit de la turbine éolienne, et une usure prématurée des paliers et/ou roulements du générateur de conversion.

En outre, si la turbine ne tourne plus, ou bien tourne à des vitesses très faibles du fait de débits faibles, il n'est plus possible de récupérer de l'énergie. Le fonctionnement correct du dispositif est alors en péril.

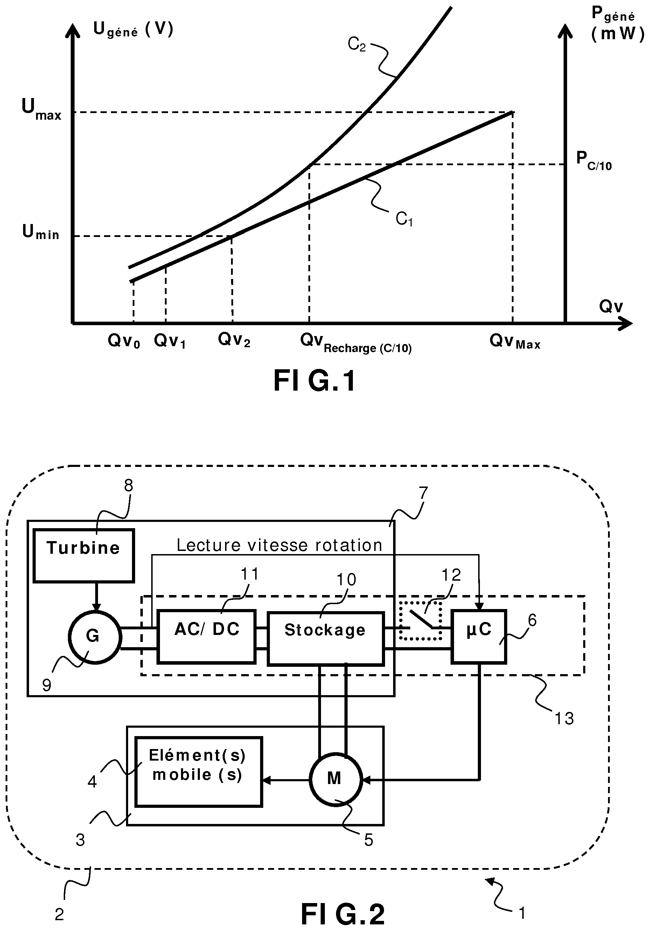

Pour fixer les idées, on a représenté sur la figure 1 la caractéristique d'un générateur de conversion, composé d'une génératrice classique aimant-bobines, associée à une turbine éolienne. La courbe C₁ représente la variation de la tension U_{géné} en Volts issue du générateur de conversion relié à la turbine en fonction du débit d'air Qv auquel la turbine est soumise dans la bouche. La valeur Uₘᵢₙ correspond à la tension minimale nécessaire pour permettre à l'électronique de démarrer et d'être sensiblement autonome en énergie, cette tension minimale Uₘᵢₙ correspondant à un débit d'air Qv₂. La valeur Uₘₐₓ correspond quant à elle à la tension maximale acceptable dans le dispositif, cette tension maximale Uₘₐₓ correspondant à un débit d'air Qvₘₐₓ. La courbe C₂ représente la courbe caractéristique de la puissance délivrée par le générateur de conversion, qui évolue comme le cube de la vitesse d'air.

Sur la figure 1, on a représenté également deux valeurs de débits caractéristiques de la turbine, à savoir la valeur Qv₁ qui représente le débit de démarrage de la turbine, c'est-à-dire le débit à partir duquel le flux d'air met en rotation la turbine (à débit montant), et la valeur Qv₀ qui représente le débit auquel la turbine s'arrête, alors qu'elle était auparavant en rotation (à débit descendant). Ce débit Qv₀ est usuellement inférieur à Qv₁.

Dans cette configuration, le seuil de fonctionnement d'un registre autonome tel que celui décrit dans le document de brevet US 5, 251, 815 est donc théoriquement de Qv₂, débit permettant l'auto-alimentation de l'électronique (seuil d'autonomie). Ce registre ne peut plus fonctionner pour des débits inférieurs à Qv₂, voire pour des débits aux alentours de Qv₂ (oscillations lors de la régulation). De plus, le registre n'a pas la capacité de se remettre en service lorsque le débit d'air devient inférieur au débit d'arrêt Qv₀.

La présente invention a pour but d'améliorer significativement la qualité de régulation comparativement aux bouches mécaniques actuelles (autoréglables, hygroréglables) et de pallier les limitations des dispositifs autonomes d'extraction ou d'insufflation d'air connus en permettant un fonctionnement du dispositif pour des débits inférieurs au seuil d'autonomie précité Qv₂.

Pour ce faire, la présente invention a pour objet un dispositif autoalimenté d'extraction ou d'insufflation d'air selon la revendication 1.

Selon d'autres aspects possibles de l'invention :
- le circuit électronique de contrôle est avantageusement configuré pour mesurer ou estimer le niveau de charge du dispositif de stockage et comparer le niveau de charge mesuré ou estimé audit seuil de charge minimale prédéfini ;
- le circuit électronique de contrôle est avantageusement configuré pour mesurer ou estimer la donnée représentative de la vitesse de rotation de la turbine ;
- le dispositif autoalimenté est de préférence associé à un dispositif de mesure ou d'estimation du débit d'air traversant le dispositif autoalimenté ;
- ladite valeur de débit est avantageusement prédéterminée en fonction de la capacité de recharge du dispositif de stockage, et de préférence à la valeur de l'intensité de recharge maximale du dispositif de stockage ;
- ladite valeur de débit prédéterminée peut correspondre à un débit maximal du dispositif ;
- ledit dispositif de mesure ou d'estimation du débit d'air traversant le dispositif autoalimenté peut comporter un capteur de débit intégré dans le dispositif autoalimenté ;
- ledit capteur de débit comporte avantageusement ladite turbine, et le circuit électronique de contrôle est alors configuré pour estimer le débit d'air traversant le dispositif autoalimenté à partir du signal électrique en sortie du générateur de conversion, et/ou du niveau d'ouverture de l'élément de l'agencement de modulation ;
- le débit d'air estimé par le circuit électronique de contrôle peut constituer la donnée représentative de la vitesse de rotation de la turbine ;
- le circuit électronique de contrôle peut être en outre configuré, pour réaliser, en dehors dudit mode de gestion de stockage d'énergie, un asservissement de la position de l'élément de l'agencement de modulation du débit par comparaison du débit mesuré ou estimé à un débit de consigne, pour obtenir un débit traversant le dispositif autoalimenté sensiblement égal au débit de consigne;
- le débit de consigne est de préférence modulé en fonction d'au moins un paramètre, tel qu'une caractéristique liée à l'air, une détection de présence d'une personne, et/ou une action de commande du dispositif autoalimenté par un utilisateur ;
- selon un mode de réalisation possible, ledit mode de gestion du stockage d'énergie peut rester activé pendant une période prédéfinie fonction de caractéristiques de recharge du dispositif de stockage ;
- selon un mode de réalisation possible, ledit mode de gestion du stockage d'énergie reste activé tant qu'un niveau de charge mesuré par ledit circuit électronique de contrôle est inférieur à une valeur de charge prédéfinie fonction de caractéristiques de recharge du dispositif de stockage ;
- ladite turbine est de préférence une turbine hélicoïde ;
- le circuit électronique de contrôle peut avantageusement comporter des moyens de communication pour recevoir des données d'au moins un équipement distant et/ou envoyer des données vers au moins un équipement distant ;
- les données reçues et/ou envoyées comportent par exemple le niveau de charge mesuré ou estimé du dispositif de stockage, et/ou la donnée mesurée ou estimée représentative de la vitesse de rotation de la turbine, et/ou le débit d'air mesuré ou estimé traversant le dispositif, et/ou le débit de consigne, et/ou une information relative à l'état activé ou non du mode de gestion du stockage d'énergie ;
- le dispositif autoalimenté peut constituer une bouche autoalimentée d'extraction ou d'insufflation d'air.

L'invention a également pour objet une installation de ventilation d'un local, caractérisée en ce qu'elle comporte au moins un groupe de ventilation, un réseau de gaines, ainsi qu'au moins un dispositif autoalimenté d'extraction ou d'insufflation d'air selon l'invention.

Les différents aspects de l'invention seront mieux compris au vu de la description suivante faite en référence aux figures annexées, dans lesquelles :
- la figure 1, déjà décrite ci-avant, illustre un exemple de variations de la tension et puissance générées par la rotation d'une turbine éolienne en fonction du débit d'air auquel la turbine est soumise ;
- la figure 2 donne un synoptique représentant des éléments fonctionnels pour une bouche autoalimentée d'extraction ou d'insufflation d'air susceptible d'appliquer les principes de l'invention ;
- la figure 3 représente un organigramme de principe de fonctionnement d'un dispositif autoalimenté ;
- la figure 4 représente un autre organigramme de principe de fonctionnement d'un dispositif conforme à l'invention ;
- les figures 5a et 5b sont des vues en perspective et en coupe longitudinale d'un exemple de bouche autoalimentée susceptible d'appliquer les principes de l'invention, respectivement en position intermédiaire et en position ouverte de son élément mobile de modulation de débit.

Dans la suite de la description, les exemples concernent uniquement des bouches d'extraction ou d'insufflation d'air. Ces exemples ne doivent néanmoins pas être considérés comme limitatifs, les éléments structurels et fonctionnels des différents modes de réalisation qui vont être décrits ci-après en rapport avec l'invention pouvant être utilisés pour d'autres types de dispositifs d'extraction ou d'insufflation d'air, en particulier pour des registres de ventilation.

Comme l'illustre fonctionnellement la figure 2, une bouche 1 autoalimentée d'extraction ou d'insufflation d'air, apte à implémenter les principes de l'invention, comporte principalement un conduit 2 de circulation d'air, également appelé manchette, destiné à être raccordé à l'extrémité d'une canalisation ou gaine d'une installation générale de ventilation.

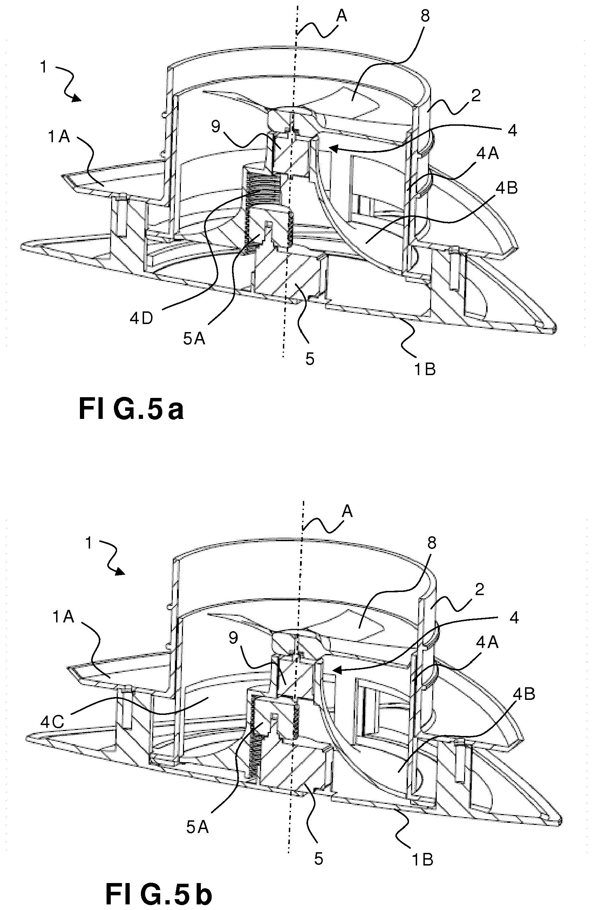

La bouche 1 comporte un agencement 3 de modulation du débit d'air traversant la bouche, comportant au moins un élément mobile 4 dont la position est réglable par un actionneur 5. L'élément mobile peut être un volet pivotant ou un autre élément tel que celui qui sera décrit ultérieurement en référence aux figures 5a et 5b.

La bouche 1 comporte également un circuit électronique de contrôle 6, comprenant par exemple un microcontrôleur, configuré pour piloter, via l'actionneur 5, la position de l'élément mobile 4 et agir ainsi sur le débit d'air traversant la bouche 1. L'actionneur 5 peut être un moteur pas à pas bipolaire piloté directement ou via un pilote spécifique, un moteur pas à pas unipolaire, un moteur à courant continu, ou autre moteur équivalent.

La bouche 1 comporte enfin une source d'énergie électrique autonome pour alimenter le circuit électronique de contrôle 6 et l'actionneur 5. La source d'énergie électrique autonome est au moins partiellement de nature aéraulique et comprend à cet effet un dispositif 7 de récupération d'énergie comportant une turbine éolienne 8 disposée au moins partiellement dans le flux d'air traversant la bouche, un générateur 9 de conversion connecté à la turbine 8 pour convertir l'énergie mécanique de rotation de la turbine en un signal électrique, et un dispositif 10 de stockage de l'énergie récupérée à partir dudit signal électrique. Plus précisément, un convertisseur 11 de tension, disposé en aval du générateur 9 de conversion, transforme le signal alternatif produit par le générateur 9 lors de la rotation de la turbine 8 en une tension continue stabilisée, une tension de 3,3 Volts par exemple. Ce convertisseur 11 de tension peut notamment contenir avantageusement une fonction de redressement/doubleur (type pont de Latour), pour amener un signal en courant continu, amplifié en tension, en entrée du dispositif 10 de stockage. Cette amplification permet notamment de réduire le seuil d'autonomie Qv₂ à partir duquel la bouche peut fonctionner. Le convertisseur 11 peut également contenir un composant de type stabilisateur de tension, ou « Buck-Boost », pour obtenir à nouveau un effet d'amplification de la tension permettant de réduire le seuil d'autonomie de la bouche. Le dispositif 10 de stockage de l'énergie récupérée est de préférence une batterie rechargeable, de tension 3,3 Volts par exemple, connectée en sortie du convertisseur 11 de tension. En alternative, un condensateur pourrait également remplir cette fonction de stockage.

Le circuit électronique de contrôle 6 est alimenté par le dispositif 10 de stockage et est configuré pour mesurer ou estimer le niveau de charge du dispositif 10 de stockage, par exemple à partir d'une mesure de la tension délivrée par le dispositif 10 de stockage. Optionnellement, un commutateur 12 permet avantageusement de déconnecter le circuit électronique de contrôle 6, le commutateur 12 étant piloté par un comparateur (non représenté). Ce principe permet notamment, au démarrage à l'état initial de la bouche (dispositif 10 de stockage vide), de déconnecter le circuit électronique de contrôle 6, le temps de permettre une charge du dispositif de stockage, avant commutation (en fonction d'un seuil de tension prédéterminé) et mise en fonctionnement du circuit électronique de contrôle 6.

Optionnellement, la source d'énergie électrique autonome peut en outre comporter un panneau solaire (non représenté) captant l'éclairage du local à ventiler et dont la cellule photovoltaïque (non représentée) est de préférence placée sur la partie visible de la bouche.

Tous les éléments électroniques, à savoir le circuit électronique de contrôle 6, le convertisseur 11, le dispositif 10 de stockage et le commutateur 12 optionnel, sont de préférence portés par une même carte de circuit imprimé représentée en pointillés par la référence 13.

D'autres possibilités fonctionnelles non représentées sur la figure 2 de la bouche 1 peuvent être ajoutées avantageusement :
En particulier, la bouche 1 peut être associée à un dispositif de mesure ou d'estimation ou de débit d'air traversant la bouche, ce dispositif étant soit un équipement distant avec laquelle la bouche 1 est apte à échanger des données, au travers de moyens de communication, de préférence sans fil, compris dans le circuit électronique de contrôle 6, soit un capteur de débit intégré dans la bouche 1.

Dans ce dernier cas, le capteur de débit peut comporter la turbine 8, en partant du principe que le débit d'air traversant la bouche est généralement sensiblement proportionnel à la vitesse de rotation de la turbine. En d'autres termes, dans ce mode de réalisation particulier, la turbine éolienne 8 et le générateur 9 de conversation associé servent à la fois à la récupération d'énergie électrique et à l'estimation du débit d'air. Le signal électrique délivré par le générateur 9 de conversion présente une fréquence correspondant à la fréquence de rotation de la turbine. Le circuit électronique de contrôle 6 peut donc utiliser ce signal électrique pour estimer le débit, qui constitue ici une donnée représentative de la vitesse de rotation de la turbine. Il est à noter que, dans le cas où la vitesse de rotation ne serait pas proportionnelle au débit d'air, selon le comportement aérodynamique de la bouche 1, la détermination de la vitesse peut se faire par une loi mathématique non linéaire, ou encore un tableau de valeur prédéterminé, de type modélisation par exemple. De manière alternative également, dans le cas où la corrélation entre le débit et la vitesse de rotation serait dépendante du niveau de pression du réseau aéraulique (dans le cas de fuites par exemple, ou encore dans le cas où la turbine n'est disposée que dans une partie du flux d'air), la mesure ou l'estimation du débit peut être réalisée préférentiellement par mesure de la vitesse de la turbine, associée à la mesure de l'ouverture de l'élément de modulation, selon une loi de caractérisation préalablement déterminée, sous forme d'une équation ou d'un tableau de valeur. La mesure de l'ouverture de l'élément de modulation peut être par exemple réalisée par comptage des pas, dans le cas d'un actionneur de type moteur pas à pas, associé par exemple à une mise en butée ponctuelle ou régulière, permettant une estimation fiable du niveau d'ouverture de l'élément de modulation.

La bouche 1 disposant d'une mesure ou d'une estimation du débit d'air, le circuit électronique de contrôle 6 peut ainsi être configuré, dans un mode de réalisation particulier, pour réaliser un asservissement de la position de l'élément mobile 4 en comparant le débit mesuré ou estimé avec un débit de consigne Qv_{consigne} de manière à obtenir, en fonctionnement normal, un débit d'air traversant la bouche 1 sensiblement égal à ce débit de consigne Qv_{consigne}.

Selon le mode de réalisation considéré, la consigne peut être une consigne fixe ou une consigne fonction d'un ou plusieurs paramètres complémentaires.

Ces paramètres complémentaires peuvent notamment provenir d'autres capteurs que le capteur de débit, capteurs également intégrés à la bouche, ou disposés dans le local à ventiler, et dont la fonction est de renseigner la bouche de ventilation sur un besoin de ventilation dans la zone de l'espace où la bouche de ventilation est placée, ou bien dans une autre zone de l'espace où la bouche de ventilation est disposée.

Ils peuvent par exemple consister en une mesure effectuée par un capteur additionnel porté par la bouche 1 et alimenté par la source d'alimentation autonome de la bouche, ce capteur fournissant une mesure relative à la qualité de l'air traversant la bouche 1 ou QAI (capteur de CO₂, d'humidité, de température, de COV, compteurs de particules, ...). Dans un tel cas, le débit de consigne est déterminé par le circuit électronique de contrôle 6 à partir d'une loi de variation de la valeur de consigne de débit (Qv_{consigne}) en fonction de la qualité de l'air (QAI) traversant la bouche (Qv_{consigne} = f(QAI)). Cette loi est par exemple mémorisée sous forme d'une table au niveau du circuit électronique de contrôle 6.

Les paramètres complémentaires peuvent encore consister en une information d'état de nature à influer sur le fonctionnement de la bouche 1. Cette information d'état peut par exemple indiquer la présence d'individus dans l'espace ventilé par la bouche de ventilation considérée, présence détectée par un capteur de présence. Elle peut aussi correspondre à une action d'un utilisateur, par exemple l'activation manuelle de la « surventilation cuisine » au niveau d'une bouche de ventilation placée dans une cuisine. Elle peut également, par exemple, consister en une information relative à l'entrée dans une période particulière de la journée, information pouvant être délivrée par une horloge interne à la bouche de ventilation, information qui peut en outre être actualisée par un organe de gestion central du système de ventilation auquel la bouche est intégrée.

Dans le cas où les données relatives à ces paramètres ne sont pas directement disponibles au niveau de la bouche 1, elles peuvent lui être communiquées via les moyens de communication lui permettant d'échanger des informations avec des éléments externes.

Quel que soit le niveau de fonctionnalité associé à la bouche (au minimum celui représenté sur la figure 2), l'objectif de la présente invention est, comme vu dans la partie introductive en liaison avec la figure 1, de permettre à la bouche 1 de pouvoir fonctionner en toutes circonstances, en particulier pour des débits d'air qui seraient plus faibles que le seuil d'autonomie précité Qv₂.

Cet objectif est atteint conformément à l'invention qui prévoit que le circuit électronique de contrôle 6 est configuré pour un mode de gestion du stockage d'énergie dans lequel il pilote, sur la survenance d'au moins un évènement déclencheur, la position de l'élément mobile 4 de manière à augmenter le débit d'air traversant la bouche et augmenter par suite le niveau de charge du dispositif 10 de stockage.

En d'autres termes, on autorise, dans ce mode de gestion du stockage d'énergie, une augmentation ponctuelle du débit d'air par modification de la position de l'élément mobile 4 pour permettre au dispositif 10 de stockage d'être rechargé.

Il convient de noter à ce stade que l'expression « sur la survenance » couvre à la fois le cas où le mode de gestion du stockage d'énergie est déclenché immédiatement au moment où ledit au moins un évènement déclencheur survient, mais aussi les cas où une temporisation volontaire prédéfinie ou intrinsèque au temps de réaction du dispositif est envisagée (notamment dans les cas où les mesures nécessaires à la détection de l'évènement ne se font pas en continu mais seulement de manière périodique, afin d'économiser l'énergie).

Ledit au moins un évènement déclencheur peut être de plusieurs types qui vont maintenant être explicités.

Selon un premier mode de réalisation non couvert par la revendication 1, la bouche 1 analyse elle-même le niveau de charge de son dispositif 10 de stockage et en déduit un besoin de recharge ou non. Dans ce cas, ledit au moins un évènement déclencheur est constitué par le passage du niveau de charge mesuré ou estimé du dispositif 10 de stockage en-deçà d'un seuil de charge minimale prédéfini S. Le seuil S est défini de manière à conserver une quantité d'énergie suffisante permettant une ouverture partielle, voire idéalement totale, de l'élément mobile 4. De cette manière, même en cas d'arrêt de la ventilation ou de démontage de la bouche, pendant une durée conséquente, celle-ci peut se replacer en ouverture totale, de manière à pouvoir s'adapter à toute nouvelle installation. Le seuil S peut être par exemple égal à 20% de la capacité de la batterie.

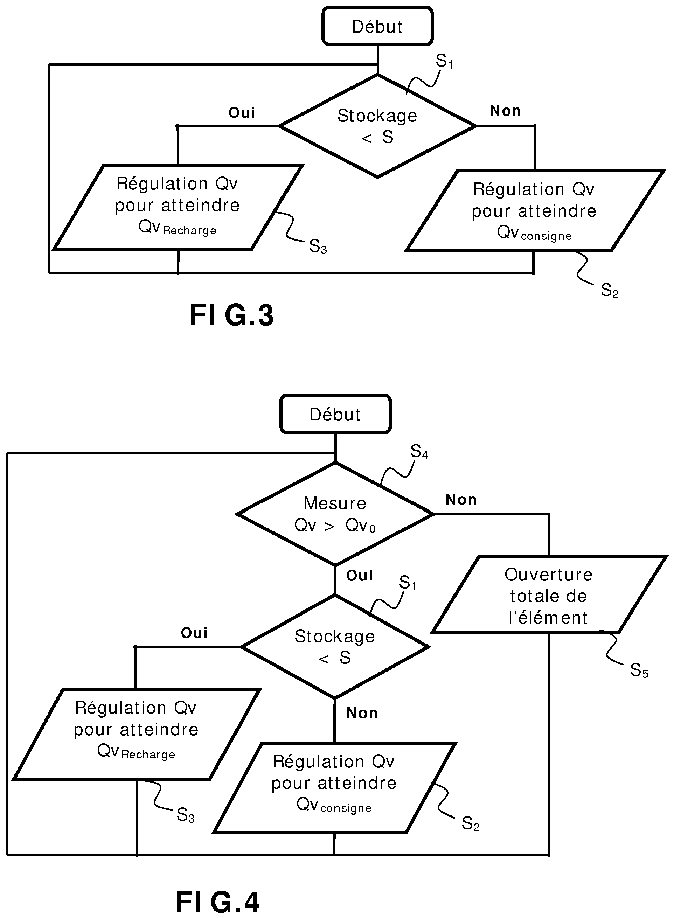

Comme illustré sur la figure 3, le circuit électronique de contrôle 6 procède à la comparaison du niveau de charge mesuré ou estimé avec le seuil de charge minimale (étape S₁), soit de façon continue, soit de préférence périodiquement. Tant que le niveau mesuré ou estimé est supérieur au seuil de charge minimale S, la bouche continue de fonctionner selon son mode de fonctionnement normal, dans l'exemple de la figure 3 en commandant une position de l'élément mobile 4 permettant d'obtenir un débit d'air traversant correspondant à débit de consigne Qvc_{onsigne} (étape S₂). Dans le cas où le niveau de charge est inférieur seuil de charge minimale prédéfini S, le circuit électronique de contrôle 6 commande le positionnement de l'élément mobile 4 pour réguler le débit d'air traversant à un débit de recharge Qv_{recharge} supérieur ou égal au seuil d'autonomie Qv₂, de manière à procéder à la recharge du dispositif de stockage (étape S₃). La régulation du débit de recharge permet avantageusement de générer une intensité identique en mode de gestion du stockage d'énergie, quelle que soit la pression du réseau aéraulique de l'installation.

De manière alternative, on peut imposer une position fixe à l'élément mobile, par exemple la position totalement ouverte, correspondant au débit maximal Qvₘₐₓ. Ce cas de figure est particulièrement bien adapté dans le cas où la bouche ne dispose pas d'une mesure ou d'une estimation du débit d'air la traversant, ou encore dans le cas où la vitesse de rotation de la turbine éolienne n'est pas représentative du débit d'air. A titre d'exemple, la turbine peut avoir volontairement placée de sorte à ne pas voir passer la totalité du flux d'air, par exemple pour limiter les pertes de charges.

Selon un autre mode de réalisation également avantageux, ledit au moins un évènement déclencheur est constitué par une détection d'arrêt de la turbine 8 ou le passage d'une donnée mesurée ou estimée représentative de la vitesse de rotation de la turbine 8 en-deçà d'un seuil de rotation minimale prédéfini. Pour ce faire, le circuit électronique de contrôle 6 est de préférence configuré pour mesurer ou estimer lui-même la donnée représentative de la vitesse de rotation de la turbine 8, à partir de la fréquence du signal électrique délivré par le générateur 9 de conversion. Lorsqu'une bonne corrélation peut être effectuée entre la vitesse de rotation de la turbine 8 et le débit d'air traversant la bouche, la détection d'arrêt de rotation de la turbine peut correspondre au débit d'arrêt précité Qv₀ et le seuil de rotation minimal peut correspondre à tout débit situé entre le débit Qv₁ de démarrage de la turbine et le seuil d'autonomie Qv₂.

En cas de détection d'arrêt de la turbine 8, le circuit électronique de contrôle 6 commande de préférence une position de l'élément mobile correspondant à la position maximale autorisant le débit d'air maximal Qvₘₐₓ. Cela correspond ainsi à un mode de sécurité dans lequel, même en cas d'arrêt de la ventilation ou de démontage de la bouche 1 pendant une durée conséquente, cette dernière est placée en position d'ouverture maximale lui permettant de se remettre en route.

La figure 4 illustre un algorithme correspondant à autre cas de figure dans lequel la bouche contrôle à la fois le seuil de stockage S et l'arrêt de la turbine. On retrouve sur cette figure 4 les étapes S₁, S₂ et S₃ déjà décrites en référence à la figure 3. De manière différente ici, le circuit électronique de contrôle 6 détecte en outre l'arrêt de la turbine 8, par exemple par comparaison d'un débit mesuré par rapport au débit d'arrêt Qv₀ (étape S₄), et commande dans ce cas (étape S₅) une position de l'élément mobile correspondant à la position maximale autorisant le débit d'air maximal Qvₘₐₓ. Les étapes de cette figure 4 ont été illustrées selon un ordre donné, mais pourraient être interverties.

Un autre cas de figure particulièrement intéressant résulte d'une combinaison spécifique des deux cas précédents. Ici, le dit au moins un évènement déclencheur est constitué en fait d'un séquencement particulier de deux événements, à savoir d'abord une détection d'arrêt de la turbine 8, puis du passage du niveau de charge mesuré ou estimé du dispositif 10 de stockage en-deçà du seuil de charge minimale prédéfini S. Contrairement au cas précédent, l'ordre est ici important. Dans ce cas de figure, un mode de fonctionnement est possible en dessous du débit Qv₀, par exemple par une régulation uniquement en ouverture de l'élément de modulation, et une absence totale d'information en provenance de la turbine. Dans ce cas, l'estimation ou la mesure du débit pourra être réalisée par la position de l'élément de modulation, en particulier par sa position à laquelle la turbine s'est arrêtée. Cette information, liée au niveau de pression dans le réseau aéraulique, pourra permettre d'estimer une position de l'élément de modulation pour réguler un certain débit, par une équation ou un tableau de valeur, cette régulation étant en boucle ouverte. Ce mode de réalisation permet ainsi d'augmenter encore la plage de fonctionnement possible du dispositif.

Dans tous les cas de figures, la position de l'élément mobile 4 en mode de gestion de stockage d'énergie est avantageusement modulée pour obtenir un débit de recharge Qv_{recharge} (évoluant entre Qv₂ et Qvₘₐₓ) prédéterminé en fonction de la capacité de recharge du dispositif 10 de stockage d'énergie, et de préférence à la valeur de l'intensité de recharge maximale du dispositif 10 de stockage. Le débit de recharge est préférentiellement choisi de manière à générer un courant I_{recharge} prédéfini, adapté au dispositif de stockage, selon des éléments de dimensionnement bien connus de l'homme de métier. Par exemple, dans le cas d'une batterie NiCd, on pourra par exemple choisir Qv_{recharge} de manière à ce que ce débit permette de générer un courant I_{recharge} égal à 1/10ème du courant nominal de la batterie. Par la suite, on pourra stopper le mode de gestion de stockage d'énergie après une temporisation de 14 heures environ, ou bien par surveillance du niveau de tension de la batterie (baisse de tension en fin de charge). De manière alternative, I_{recharge} peut être de 1/5 du courant nominal, avec une durée maximale de 6 heures environ. Enfin, de manière encore alternative, l'intensité de charge I_{recharge} peut être égale au courant nominal de la batterie, avec une durée maximale d'une heure.

Dans tous les cas, si la bouche dispose également d'un moyen de communication lui permettant d'échanger des données avec un ou plusieurs équipements distants, l'information relative à l'état activé ou non du mode de stockage d'énergie est avantageusement transmise à ces équipements distants.

Grâce aux principes précédents de déclenchement du mode de gestion de stockage d'énergie sur la survenance de différents évènements déclencheurs, on garantit l'autonomie en énergie de la bouche dans un grand nombre de situations, y compris lorsque le débit d'air traversant la bouche devient inférieur au débit Qv₂ (seuil d'autonomie), et un fonctionnement possible même après arrêt de la turbine.

Les figures 5a et 5b représentent un exemple de réalisation d'une bouche fonctionnant selon les principes exposés ci-dessus, respectivement pour une position intermédiaire et une position totalement ouverte de son élément de modulation de débit. Les éléments communs à la figure fonctionnelle 2 portent les mêmes références. Une installation de ventilation munie d'un ventilateur et d'un réseau de gaines, comporte au moins une telle bouche en communication d'air avec le réseau et le ventilateur.

La bouche 1 comporte un conduit 2 d'axe longitudinal A, destiné à être disposé dans un orifice d'une paroi et pourvu d'une bride radiale 1A d'appui sur la paroi, une plaque 1B de façade solidaire du conduit 2 et un élément 4 de modulation du débit d'air, mobile d'une position ouverte à une position fermée du flux d'air sortant de ou entrant dans la bouche entre la bride radiale 1A d'appui du conduit et la plaque 1B de façade, par déplacement axial le long de l'axe longitudinal A du conduit 2.

La bouche comporte un actionneur 5 d'entraînement de l'élément mobile 4, maintenu entre la face arrière de la plaque 1B de façade et l'élément mobile 4

L'élément mobile 4 comporte ici une partie de support 4A tubulaire de même axe longitudinal A que le conduit 2, de génératrice droite et en translation sur la face interne du conduit. Ce support 4A est ici représenté de section circulaire coopérant directement avec le conduit 2 lui-même circulaire, en revanche, l'une ou l'autre peuvent être de section quelconque comme par exemple carrée.

L'élément mobile 4 comporte également, portée par la partie de support 4A, une partie de guidage 4B du flux d'air, tubulaire d'axe longitudinal parallèle à l'axe longitudinal A du conduit, la partie de support 4A comportant des orifices 4C aptes à assurer le passage du flux d'air sortant de ou entrant dans la bouche 1 entre la bride radiale 1A d'appui du conduit et la plaque 1B de façade vers la partie de guidage 4B, en position ouverte.

Plus précisément, la partie de guidage 4B du flux d'air tubulaire est de même axe longitudinal A que le conduit et de génératrice courbe radialement évasée.

Les orifices 4C sont ainsi aptes à assurer le passage du flux d'air sortant de ou entrant dans la bouche 1 entre la bride 1A radiale d'appui du conduit et la plaque 1B de façade vers la partie de guidage 4B, en position ouverte (figure 5b), et dans une position intermédiaire quelconque (figure 5a) entre la position ouverte et une position fermée (non représentée).

L'actionneur 5 d'entraînement de l'élément mobile 4 est solidaire de la plaque 1B de façade et l'élément mobile 4 comporte un taraudage ou une crémaillère 4D coopérant avec une vis 5A liée à l'actionneur 5 qui est un moteur rotatif, ce taraudage ou cette crémaillère 4D ou cette vis 5A ayant une hauteur strictement supérieure à l'amplitude de déplacement dudit élément mobile 4 de manière à assurer une course complète de ce dernier.

Plus précisément, ce taraudage ou cette crémaillère 4D est constitué d'une section taraudée en saillie en avant de la partie de guidage 4B.

La bouche 1 est par ailleurs équipée du dispositif de récupération d'énergie assurant au moins partiellement son auto-alimentation électrique. Le dispositif de récupération d'énergie comporte, comme vu précédemment, la turbine 8 hélicoïde dont l'axe de rotation est de préférence sensiblement parallèle à l'axe longitudinal A du conduit 2, disposée à l'arrière de la partie de guidage 4B. La turbine 8 est connectée au générateur 9 de conversion transformant son énergie mécanique de rotation en le signal électrique potentiellement couplé à la position de l'élément de modulation, et donc corrélé au débit d'air traversant la bouche.

Le dispositif de stockage de l'énergie récupéré, et le circuit électronique de contrôle ne sont pas représentés sur ces figures 5a, 5b.

Le circuit électronique de contrôle pilote la position de l'élément mobile 4, via l'actionneur 5, selon l'état d'un capteur connecté au circuit électronique de contrôle et/ou selon une mesure de débit dans la gaine en communication de fluide avec la bouche et/ou selon une instruction de commande fournie par l'utilisateur par voie radio ou filaire. Grâce à cet asservissement, la bouche 1 peut donc ainsi être disposée selon une pluralité de positions entre :
- une position fermée (non représentée), dans laquelle l'extrémité avant de la partie de support 4A est en butée sensiblement étanche contre la bride 1A radiale d'appui ; et
- une position totalement ouverte (figure 5b), dans laquelle l'extrémité avant de la partie de support 4A est en butée contre la plaque 1B de façade.

Dans la position intermédiaire représentée sur la figure 5a, le flux d'air sortant de ou entrant dans la bouche 1 entre la bride 1A radiale d'appui du conduit et la plaque 1B de façade peut circuler sur une hauteur intermédiaire des orifices 4C de la partie de support 4A.

Le circuit électronique de contrôle est en outre configuré, conformément à l'invention, pour le mode de gestion du stockage d'énergie décrit ci-avant.

## Revendications

1. Dispositif (1) autoalimenté d'extraction ou d'insufflation d'air destiné à être positionné dans une gaine de ventilation d'une installation de ventilation comportant au moins un groupe de ventilation, le dispositif (1) comportant :
- une source d'énergie électrique autonome comprenant un dispositif (7) de récupération d'énergie comportant une turbine (8) agencée pour être disposée au moins partiellement dans le flux d'air traversant ledit dispositif (1) autoalimenté, un générateur (9) de conversion connecté à la turbine pour convertir l'énergie mécanique de rotation de la turbine en un signal électrique, et un dispositif (10) de stockage de l'énergie récupérée à partir dudit signal électrique ;
- un agencement (3) de modulation du débit d'air traversant ledit dispositif (1) autoalimenté, comportant un actionneur (5) et au moins un élément (4 ; 4A, 4B) à position réglable par l'actionneur (5), et
- un circuit électronique de contrôle (6) configuré pour piloter, via l'actionneur (5), la position de l'élément (4 ; 4A, 4B) de l'agencement (3) de modulation,
le circuit électronique de contrôle (6) et l'actionneur (5) étant alimentés par l'énergie récupérée par le dispositif (10) de stockage de ladite source d'énergie électrique, ledit dispositif (1) étant **caractérisé en ce que** ledit générateur est composé d'une génératrice aimant-bobine associée à ladite turbine (8), le générateur étant apte à générer une tension croissant linéairement en fonction d'un débit d'air (Qv) auquel la turbine (8) est soumise sur une plage de débits supérieurs à un seuil d'autonomie Qv₂ à partir duquel le dispositif (1) est autonome en énergie, le circuit électronique de contrôle (6) est en outre configuré pour un mode de gestion du stockage d'énergie dans lequel il pilote, sur la survenance d'au moins un événement déclencheur, la position de l'élément (4 ; 4A, 4B) de l'agencement (3) de modulation de manière à augmenter le débit d'air traversant le dispositif (1) autoalimenté jusqu'à une valeur de débit prédéterminée (Qv_{recharge}) supérieure au seuil d'autonomie Qv₂ et augmenter par suite le niveau de charge du dispositif (10) de stockage, ledit au moins un événement déclencheur étant constitué par une détection d'arrêt de la turbine (8) suivie du passage d'un niveau de charge mesuré ou estimé du dispositif (10) de stockage en-deçà d'un seuil de charge minimale prédéfini (S), ou par une détection d'arrêt de la turbine (8) ou le passage d'une donnée mesurée ou estimée représentative de la vitesse de rotation de la turbine (8) en-deçà d'un seuil de rotation minimale prédéfini (Qv₁, Qv₂).

2. Dispositif (1) autoalimenté selon la revendication 1, **caractérisé en ce que** le circuit électronique de contrôle (6) est configuré pour mesurer ou estimer le niveau de charge du dispositif (10) de stockage et comparer le niveau de charge mesuré ou estimé audit seuil de charge minimale prédéfini (S).

3. Dispositif (1) autoalimenté selon l'une quelconque des revendications précédentes, **caractérisé en ce que** le circuit électronique de contrôle (6) est configuré pour mesurer ou estimer la donnée représentative de la vitesse de rotation de la turbine (8).

4. Dispositif (1) autoalimenté selon l'une quelconque des revendications précédentes, caractérisé en qu'il est associé à un dispositif de mesure ou d'estimation du débit d'air traversant le dispositif (1) autoalimenté.

5. Dispositif (1) autoalimenté selon l'une quelconque des revendications précédentes, **caractérisé en ce que** ladite valeur de débit (Qv_{recharge}) est prédéterminée en fonction de la capacité de recharge du dispositif (10) de stockage, et de préférence à la valeur de l'intensité de recharge maximale du dispositif (10) de stockage.

6. Dispositif (1) autoalimenté selon l'une quelconque des revendications précédentes, **caractérisé en ce que** ladite valeur de débit prédéterminée correspond à un débit maximal (Qvₘₐₓ) du dispositif.

7. Dispositif (1) autoalimenté selon l'une quelconque des revendications 4 à 6, **caractérisé en ce que** ledit dispositif de mesure ou d'estimation du débit d'air traversant le dispositif (1) autoalimenté comporte un capteur de débit intégré dans le dispositif (1) autoalimenté.

8. Dispositif (1) autoalimenté selon la revendication 7, **caractérisé en ce que** ledit capteur de débit comporte ladite turbine (8), et **en ce que** le circuit électronique de contrôle (6) est configuré pour estimer le débit d'air traversant le dispositif (1) autoalimenté à partir du signal électrique en sortie du générateur de conversion, et/ou du niveau d'ouverture de l'élément (4 ; 4A, 4B) de l'agencement (3) de modulation.

9. Dispositif (1) autoalimenté selon la revendication 8 en combinaison avec la revendication 3, **caractérisé en ce que** le débit d'air estimé par le circuit électronique de contrôle (6) constitue la donnée représentative de la vitesse de rotation de la turbine.

10. Dispositif (1) autoalimenté selon l'une quelconque des revendications 4 à 9, **caractérisé en ce que** ledit circuit électronique de contrôle (6) est configuré, pour réaliser, en dehors dudit mode de gestion de stockage d'énergie, un asservissement de la position de l'élément (4 ; 4A, 4B) de l'agencement (3) de modulation du débit par comparaison du débit mesuré ou estimé à un débit de consigne (Qv_{consigne}), pour obtenir un débit traversant le dispositif (1) autoalimenté sensiblement égal au débit de consigne.

11. Dispositif (1) autoalimenté selon la revendication 10, **caractérisé en ce que** le débit de consigne est modulé en fonction d'au moins un paramètre, tel qu'une caractéristique liée à l'air, une détection de présence d'une personne, et/ou une action de commande du dispositif (1) autoalimenté par un utilisateur.

12. Dispositif (1) autoalimenté selon l'une quelconque des revendications précédentes, **caractérisé en ce que** ledit mode de gestion du stockage d'énergie reste activé pendant une période prédéfinie fonction de caractéristiques de recharge du dispositif (10) de stockage.

13. Dispositif (1) autoalimenté selon l'une quelconque des revendications 1 à 12, **caractérisé en ce que** ledit mode de gestion du stockage d'énergie reste activé tant qu'un niveau de charge mesuré par ledit circuit électronique de contrôle (6) est inférieur à une valeur de charge prédéfinie fonction de caractéristiques de recharge du dispositif (10) de stockage.

14. Dispositif (1) selon l'une quelconque des revendications précédentes, **caractérisé en ce que** ladite turbine (8) est une turbine hélicoïde.

15. Dispositif (1) autoalimenté selon l'une quelconque des revendications précédentes, **caractérisé en ce que** le circuit électronique de contrôle (6) comporte des moyens de communication pour recevoir des données d'au moins un équipement distant et/ou envoyer des données vers au moins un équipement distant.

16. Dispositif (1) autoalimenté selon la revendication 15 en combinaison avec l'une quelconque des revendications 2 à 11, **caractérisé en ce que** les données reçues et/ou envoyées comportent le niveau de charge mesuré ou estimé du dispositif de stockage, et/ou la donnée mesurée ou estimée représentative de la vitesse de rotation de la turbine, et/ou le débit d'air mesuré ou estimé traversant le dispositif, et/ou le débit de consigne, et/ou une information relative à l'état activé ou non du mode de gestion du stockage d'énergie.

17. Dispositif (1) autoalimenté selon l'une quelconque des revendications précédentes, **caractérisé en ce qu'**il constitue une bouche autoalimentée d'extraction ou d'insufflation d'air.

18. Installation de ventilation d'un local, **caractérisée en ce qu'**elle comporte au moins un groupe de ventilation, un réseau de gaines, ainsi qu'au moins un dispositif (1) autoalimenté d'extraction ou d'insufflation d'air selon l'une quelconque des revendications 1 à 17.

## Patentansprüche

1. Vorrichtung (1) zum Ab- und Ansaugen von Luft mit eigener Stromversorgung zur Positionierung in einem Lüftungsrohr einer mindestens eine Belüftungseinheit umfassenden Lüftungseinrichtung, wobei die Vorrichtung (1) umfsst:
- eine eigene Stromquelle, umfassend eine Energierückgewinnungsvorrichtung (7), welche umfasst: eine Turbine (8), die derart angeordnet ist, dass sie mindestens zum Teil in dem die Vorrichtung (1) durchquerenden Luftstrom angeordnet werden kann, einen an die Turbine angeschlossenen Umwandlungsgenerator (9) zur Umwandlung der mechanischen Rotationsenergie der Turbine in ein elektrisches Signal und eine Vorrichtung (10) zur Speicherung der mithilfe des elektrischen Signals zurückgewonnenen Energie;
- eine Anordnung (3) zur Modulation des Durchflusses der die Vorrichtung (1) durchquerenden Luft, umfassend einen Stellantrieb (5) und mindestens ein Element (4; 4A, 4B), dessen Position über den Stellantrieb (5) verstellbar ist, und
- einen elektronischen Regelkreis (6), der zur Steuerung der Position des Elements (4; 4A, 4B) der Modulationsanordung (3) über den Stellantrieb (5) konfiguriert ist,
wobei der elektronische Regelkreis (6) und der Stellantrieb (5) mit der von der Speicherungsvorrichtung (10) der Stromquelle zurückgewonnenen Energie versorgt werden, wobei die Vorrichtung (1) **dadurch gekennzeichnet ist, dass** der Generator aus einem mit der Turbine (8) verbundenen Magnet-Spule-Generator besteht, wobei der Generator dazu geeignet ist, eine als Funktion eines Luftdurchflusses (Qv), dem die Turbine (8) ausgesetzt ist, linear ansteigende Spannung in einem Durchflussbereich zu erzeugen, der einen Selbstversorgungsschwelle Qv₂, oberhalb derer die Vorrichtung (1) sich selbst mit Energie versorgt, übersteigt, wobei der elektronische Regelkreis (6) ferner für einen Energiespeicherungsverwaltungsmodus konfiguriert ist, in dem er bei Eintreten mindestens eines auslösenden Ereignisses die Position des Elements (4; 4A, 4B) der Modulationsnordnung (3) derart steuert, dass der Durchfluss der die Vorrichtung (1) durchquerenden Luft auf einen die Selbstversorgungsschwelle Qv₂ übersteigenden vorgegebenen Durchflusswert (Qv_{Aufladen}) erhöht und anschließend den Ladestand der Speicherungsvorrichtung (10) erhöht, wobei das mindestens eine auslösende Ereignis darin besteht, dass ein Stillstand der Turbine (8) erkannt wird und anschließend der gemessene oder geschätzte Ladestand der Speicherungsvorrichtung (10) eine vorgegebene untere Ladegrenze (S) unterschreitet, oder dass ein Stillstand der Turbine (8) erkannt wird oder ein gemessener oder geschätzter repräsentativer Wert der Drehzahl der Turbine (8) eine vorgegebene Mindestdrehzahl (Qv₁, Qv₂) unterschreitet.

2. Selbstversorgende Vorrichtung (1) nach Anspruch 1, **dadurch gekennzeichnet, dass** der elektronische Regelkreis (6) zum Messen oder Abschätzen des Ladestands der Speicherungsvorrichtung (10) und zum Vergleichen des gemessenen bzw. geschätzten Ladestands mit der vorgegebenen Untergrenze (S) konfiguriert ist.

3. Selbstversorgende Vorrichtung (1) nach einem der vorstehenden Ansprüche, **dadurch gekennzeichnet, dass** der elektronische Regelkreis (6) zum Messen oder Abschätzen des repräsentativen Werts der Drehzahl der Turbine (8) konfiguriert ist.

4. Selbstversorgende Vorrichtung (1) nach einem der vorstehenden Ansprüche, **dadurch gekennzeichnet, dass** sie mit einer Vorrichtung zum Messen oder Abschätzen des Durchflusses der die Vorrichtung (1) durchquerenden Luft verbunden ist.

5. Selbstversorgende Vorrichtung (1) nach einem der vorstehenden Ansprüche, **dadurch gekennzeichnet, dass** der Durchflusswert (Qv_{Aufladen}) als Funktion des Ladungsspeichervermögens der Speicherungsvorrichtung (10) vorgegeben wird und vorzugsweise gleich dem maximalen Ladungsintensitätswert der Speichervorrichtung (10) ist.

6. Selbstversorgende Vorrichtung (1) nach einem der vorstehenden Ansprüche, **dadurch gekennzeichnet, dass** der vorgegebene Durchflusswert einem maximalen Durchflusswert (Qvₘₐₓ) der Vorrichtung entspricht.

7. Selbstversorgende Vorrichtung (1) nach einem der Ansprüche 4 - 6, **dadurch gekennzeichnet, dass** die Vorrichtung zum Messen oder Abschätzen des Durchflusses der die Vorrichtung (1) durchquerenden Luft einen in die Vorrichtung (1) integrierten Durchflusssensor umfasst.

8. Selbstversorgende Vorrichtung (1) nach Anspruch 7, **dadurch gekennzeichnet, dass** der Durchflusssensor die Turbine (8) umfasst, und dass der elektronische Regelkreis (6) zum Abschätzen des Durchflusses der die Vorrichtung (1) durchquerenden Luft anhand des vom Umwandlungsgenerator ausgehenden elektrischen Signals und/oder des Öffnungsgrades des Elements (4; 4A, 4B) der Modulationsanordnung (3) konfiguriert ist.

9. Selbstversorgende Vorrichtung (1) nach Anspruch 8 in Verbindung mit Anspruch 3, **dadurch gekennzeichnet, dass** der vom elektronischen Regelkreis (6) abgeschätzte Luftdurchfluss den für die Drehzahl der Turbine repräsentativen Wert darstellt.

10. Selbstversorgende Vorrichtung (1) nach einem der Ansprüche 4 - 9, **dadurch gekennzeichnet, dass** der elektronische Regelkreis (6) zum Regeln der Position des Elements (4; 4A, 4B) der Modulationsordnung (3) außerhalb des Energiespeicherungsmodus durch einen Vergleich des gemessenen bzw. geschätzten Durchflusses mit einem Solldurchfluss (Qv_{Soll}) konfiguriert ist, um einen Durchfluss durch die Vorrichtung (1) zu erreichen, der im Wesentlichen gleich dem Solldurchfluss ist.

11. Selbstversorgende Vorrichtung (1) nach Anspruch 10, **dadurch gekennzeichnet, dass** der Solldurchfluss moduliert wird als Funktion mindestens eines Parameters, z.B. einer mit der Luft zusammenhängenden Eigenschaft, einer Erkennung des Vorhandenseins einer Person und/oder einer von einem Bediener vorgenommenen Handlung zur Steuerung der Vorrichtung (1).

12. Selbstversorgende Vorrichtung (1) nach einem der vorstehenden Ansprüche, **dadurch gekennzeichnet, dass** der Speicherungsverwaltungsmodus über eine als Funktion von Aufladungseigenschaften der Speicherungsvorrichtung (10) vorgegebene Zeit aktiv bleibt.

13. Selbstversorgende Vorrichtung (1) nach einem der Ansprüche 1 - 12, **dadurch gekennzeichnet, dass** der Speicherungsverwaltungsmodus solange aktiv bleibt, wie ein vom elektronischen Regelkreis (6) gemessener Ladestand einen als Funktion von Aufladungseigenschaften der Speichervorrichtung (10) vorgegebenen Ladestand unterschreitet.

14. Selbstversorgende Vorrichtung (1) nach einem der vorstehenden Ansprüche, **dadurch gekennzeichnet, dass** es sich bei der Turbine (8) um eine Schraubenturbine handelt.

15. Selbstversorgende Vorrichtung (1) nach einem der vorstehenden Ansprüche, **dadurch gekennzeichnet, dass** der elektronische Regelkreis (6) Kommunikationsmittel umfasst, um Daten von mindestens einem entfernten Gerät zu empfangen und/oder Daten an mindestens ein entferntes Gerät zu senden.

16. Selbstversorgende Vorrichtung (1) nach Anspruch 15 in Verbindung mit einem der Ansprüche 2 - 11, **dadurch gekennzeichnet, dass** die empfangenen und/oder gesendeten Daten den gemessenen bzw. geschätzten Ladeestand der Speicherungsvorrichtung, und/oder den für die Drehzahl der Turbine repräsentativen gemessenen bzw. geschätzten Wert, und/oder den gemessenen bzw. geschätzten Durchfluss der die Vorrichtung durchquerenden Luft und/oder den Solldurchfluss und/oder eine Information darüber, ob der Energiespeicherungsmodus aktiviert ist oder nicht, umfassen.

17. Selbstversorgende Vorrichtung (1) nach einem der vorstehenden Ansprüche, **dadurch gekennzeichnet, dass** diese eine Luftabsaug- oder -absaugöffnung mit eigener Stromversorgung darstellt.

18. Einrichtung zur Belüftung eines Raums, **dadurch gekennzeichnet, dass** sie mindestens eine Belüftungseinheit, ein Leitungsnetz und mindestens eine Vorrichtung (1) zum Ab- oder Ansaugen von Luft nach einem der Ansprüche 1 - 17 umfasst.

## Claims

1. A self-powered device (1) for extracting or blowing air suitable for being positioned in a ventilation duct of a ventilation installation including at least one ventilation unit, the device (1) including:
- an autonomous electrical energy source comprising a device (7) for recovering energy including a turbine (8) arranged to be positioned at least partially in the stream of air passing through said self-powered device (1), a conversion generator (9) connected to the turbine to convert the rotational mechanical energy of the turbine into an electrical signal, and a storage device (10) for storing the energy recovered from said electrical signal;
- an arrangement (3) for modulating the air flow rate passing through said self-powered device (1), including an actuator (5) and at least one element (4; 4A, 4B) whose position is adjustable by the actuator (5), and
- an electronic control circuit (6) configured to control, via the actuator (5), the position of the element (4; 4A, 4B) of the modulating arrangement (3),
the electronic control circuit (6) and the actuator (5) being powered by the energy recovered by the storage device (10) of said electrical energy source, said device (1) being **characterized in that** said generator is made up of a magnet-coil generator associated with said turbine (8), the generator being able to generate a voltage increasing linearly as a function of an air flow rate (Qv) to which the turbine (8) is subject over a range of flow rates greater than an autonomy threshold Qv₂ from which the device (1) is self-sufficient in energy, the electronic control circuit (6) is further configured for an energy storage management mode in which it controls, upon the occurrence of at least one triggering event, the position of the element (4; 4A, 4B) of the modulating arrangement (3) so as to increase the air flow rate passing through the self-powered device (1) up to a predetermined flow rate value (Qv_{recharge}) greater than the autonomy threshold Qv₂ and to subsequently increase the charge level of the storage device (10), said at least one triggering event being constituted by a stoppage detection of the turbine (8) followed by a passage of a measured or estimated charge level of the storage device (10) below a predefined minimum charge threshold (S), or by a stoppage detection of the turbine (8) or the passage of a measured or estimated datum representative of the rotation speed of the turbine (8) below a predefined minimum rotation threshold (Qv₁, Qv₂).

2. The self-powered device (1) according to claim 1, **characterized in that** the electronic control circuit (6) is configured to measure or estimate the charge level of the storage device (10) and to compare the measured or estimated charge level to said predefined minimum charge threshold (S).

3. The self-powered device (1) according to any one of the preceding claims, **characterized in that** the electronic control circuit (6) is configured to measure or estimate the datum representative of the rotation speed of the turbine (8).

4. The self-powered device (1) according to any one of the preceding claims, **characterized in that** it is associated with a device for measuring or estimating the air flow rate passing through the self-powered device (1).

5. The self-powered device (1) according to any one of the preceding claims, **characterized in that** said flow rate value (Qv_{recharge}) is predetermined as a function of the recharging capacity of the storage device (10), and preferably the value of the maximum recharging intensity of the storage device (10).

6. The self-powered device (1) according to any one of the preceding claims, **characterized in that** said predetermined flow rate value corresponds to a maximum flow rate (Qvₘₐₓ) of the device.

7. The self-powered device (1) according to any one of claims 4 to 6, **characterized in that** said device for measuring or estimating the air flow rate passing through the self-powered device (1) includes a flow rate sensor integrated into the self-powered device (1).

8. The self-powered device (1) according to claim 7, **characterized in that** said flow rate sensor includes said turbine (8), and **in that** the electronic control circuit (6) is configured to estimate the air flow rate passing through the self-powered device (1) from the electrical signal at the output of the conversion generator, and/or at the opening of the element (4; 4A, 4B) of the modulating arrangement (3).

9. The self-powered device (1) according to claim 8 in combination with claim 3, **characterized in that** the air flow rate estimated by the electronic control circuit (6) constitutes the datum representative of the rotation speed of the turbine.

10. The self-powered device (1) according to any one of claims 4 to 9, **characterized in that** said electronic control circuit (6) is configured to perform, outside said energy storage management mode, governing of the position of the element (4; 4A, 4B) of the arrangement (3) for modulating the flow rate by comparing the measured or estimated flow rate to a setpoint flow rate (Qv_{consigne}), in order to obtain a flow rate passing through the self-powered device (1) that is substantially equal to the setpoint flow rate.

11. The self-powered device (1) according to claim 10, **characterized in that** the setpoint flow rate is modulated as a function of at least one parameter, such as a characteristic related to the air, a presence detection of a person, and/or a control action of the self-powered device (1) by a user.

12. The self-powered device (1) according to any one of the preceding claims, **characterized in that** said energy storage management mode remains activated for a predefined period based on recharging characteristics of the storage device (10).

13. The self-powered device (1) according to any one of claims 1 to 12, **characterized in that** said energy storage management mode remains activated as long as a charge level measured by said electronic control circuit (6) is below a predefined charging value based on recharging characteristics of the storage device (10).

14. The device (1) according to any one of the preceding claims, **characterized in that** said turbine (8) is a helical turbine.

15. The self-powered device (1) according to any one of the preceding claims, **characterized in that** the electronic control circuit (6) includes communication means for receiving data from at least one remote equipment item and/or sending data to at least one remote equipment item.

16. The self-powered device (1) according to claim 15 in combination with any one of claims 2 to 11, **characterized in that** the data received and/or sent include the measured or estimated charge level of the storage device, and/or the measured or estimated datum representative of the rotation speed of the turbine, and/or the measured or estimated air flow rate passing through the device, and/or the setpoint flow rate, and/or an information item relative to the activated or not activated state of the energy storage management mode.

17. The self-powered device (1) according to any one of the preceding claims, **characterized in that** it constitutes a self-powered mouth for extracting or blowing air.

18. A ventilation installation for a site, **characterized in that** it includes at least one ventilation unit, a duct network, as well as at least one self-powered device (1) for extracting or blowing air according to any one of claims 1 to 17.
